(19) Europäisches Patentamt
European Patent Office
Office européen des brevets

(11) **EP 3 851 982 A1**

(12) **EUROPEAN PATENT APPLICATION**

(43) Date of publication:
**21.07.2021 Bulletin 2021/29**

(51) Int Cl.:
**G06F 17/11** *(2006.01)* **G06F 17/17** *(2006.01)*
**G06N 10/00** *(2019.01)*

(21) Application number: **20217961.0**

(22) Date of filing: **31.12.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **17.01.2020 JP 2020006374**

(71) Applicant: **FUJITSU LIMITED**
**Kanagawa 211-8588 (JP)**

(72) Inventor: **Yamaguchi, Jumpei**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING PROGRAM, INFORMATION PROCESSING METHOD, AND INFORMATION PROCESSING APPARATUS**

(57) An information processing program that causes a computer to execute processing of grouping a plurality of terms included in a polynomial on a term-by-term basis for a calculation expression performing half adjust on a value of the polynomial, generating an approximation expression of the calculation expression, the approximation expression adding values of the respective grouped terms after performing half adjust on the respective grouped terms, and converting the calculation expression into a low degree polynomial by using each of the terms that is a unit of performing the half adjust in the approximation expression.

FIG. 1

**Description**

[Technical Field]

The embodiments discussed herein are related to an information processing program, an information processing method, and an information processing apparatus.

[Background Art]

Recently, an annealing calculation device has been utilized. This annealing calculation device performs annealing calculation for searching for an optimal solution by giving an initial point to a Hamiltonian being a second degree polynomial and thermally oscillating the Hamiltonian. When a certain objective function is input to such an annealing calculation device to obtain a minimum value, it is required to convert the objective function into a Hamiltonian. However, since there is a limitation on the scale of the Hamiltonian that is able to be input to the annealing calculation device on a machine-by-machine basis, the conversion is performed so that the Hamiltonian falls within the limitation.
Specifically, input to the annealing calculation device is required to be a second degree polynomial or a first degree polynomial, and, as a technique to convert a high dimensional polynomial into a second degree polynomial, a degree reduction method or the like is known. Accordingly, even in the case where the objective function includes a calculation expression that "performs half adjust on a value of a polynomial" (rounds (off) a value of polynomial), when the calculation expression is able to be represented by a polynomial, conversion into a second degree polynomial may be performed.
For example, as a technique that converts a calculation expression that "performs half adjust on a value of a polynomial" into a polynomial, there is a known technique that calculates values after half adjust for all variables included in the calculation expression and performs conversion into a polynomial based on the results of the calculation. With this technique, the calculation expression including n binary digital variables may be converted into an n-th degree polynomial.

[Citation List]

[Patent Literature]

[PTL 1] Japanese Laid-open Patent Publication No. 2000-183753

[Summary of Invention]

[Technical Problem]

However, with the above-described technique, when the number of variables included in the calculation expression for half adjust increases, the dimensions of the obtained polynomial increase. Thus, when conversion into a second degree polynomial is performed by the degree reduction method, the number of variables increases. As a result, the variables in the converted second degree polynomial may exceed the input limitation of the annealing calculation device, and accordingly, input of the second degree polynomial to the annealing calculation device may be inhibited.
For example, use of the degree reduction method allows conversion of an n-th degree polynomial into a second degree polynomial. However, as a compensation for this, at least n - 2 useless variables are added. Thus, the number of variables of a Hamiltonian having undergone half adjust is at least 2n - 2. For example, when a second generation digital annealer (registered trademark) is used as an example of the annealing calculation device, the number of variables is limited to 8192 or less. When a number n of variables of the calculation expression that "performs half adjust on a value of a polynomial" is 4100, the number of the original variables satisfies the limitation on the variables. However, after the conversion into the second degree polynomial, the number of variables included is 2n - 2 = 8200 - 2 = 8198. This does not satisfy the limitation on the variables.
In an aspect, an information processing program, a method of processing information, and an information processing apparatus that may suppress an increase in variables when a polynomial is converted into a Hamiltonian are provided.

[Solution to Problem]

According to a first proposal, an information processing program causes a computer to execute processing of grouping a plurality of terms included in a polynomial on a term-by-term basis for a calculation expression by which half adjust is performed on a value of the polynomial. The information processing program also causes the computer to execute processing of generating an approximation expression of the calculation expression by which values after half adjust obtained by performing the half adjust on values of the respective grouped terms are added. The information processing program also causes the computer to execute processing of converting the calculation expression into a low degree polynomial by using each of the terms that is a unit of performing the half adjust in the approximation expression.

[Advantageous Effects of Invention]

According to an embodiment, the increase in variables when a polynomial is converted into a Hamiltonian may be suppressed.

[Brief Description of Drawings]

FIG. 1 is a diagram illustrating an information processing apparatus according to a first embodiment;
FIG. 2 is a diagram illustrating usual polynomial conversion;
FIG. 3 is a functional block diagram illustrating a functional configuration of the information processing apparatus according to the first embodiment;
FIG. 4 is a flowchart illustrating a flow of conversion process;
FIG. 5 is a diagram illustrating a polynomial representation of a round up function;
FIG. 6 is a diagram illustrating a polynomial representation of a round down function; and
FIG. 7 is a diagram illustrating an example of a hardware configuration.

[Description of Embodiments]

Hereinafter, embodiments of an information processing program, a method of processing information, and an information processing apparatus disclosed herein will be described in detail based on the drawings. These embodiments do not limit the present invention. The embodiments may be combined with each other as appropriate within the technical scope without contradiction.

[First Embodiment]

[Description of Information Processing Apparatus]

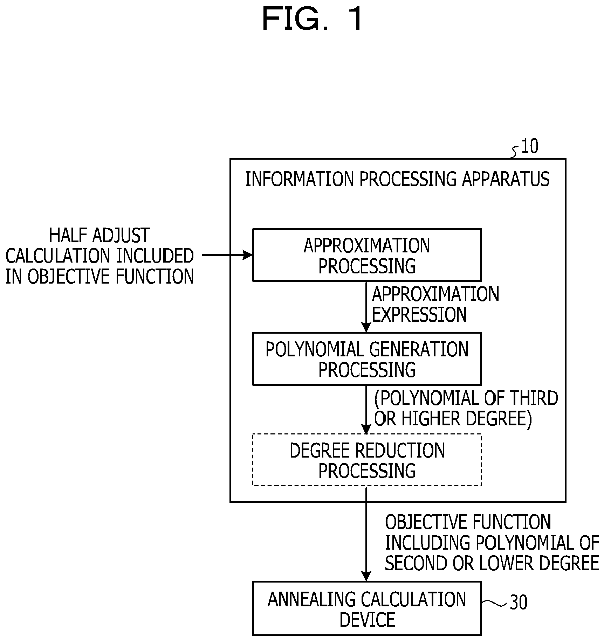

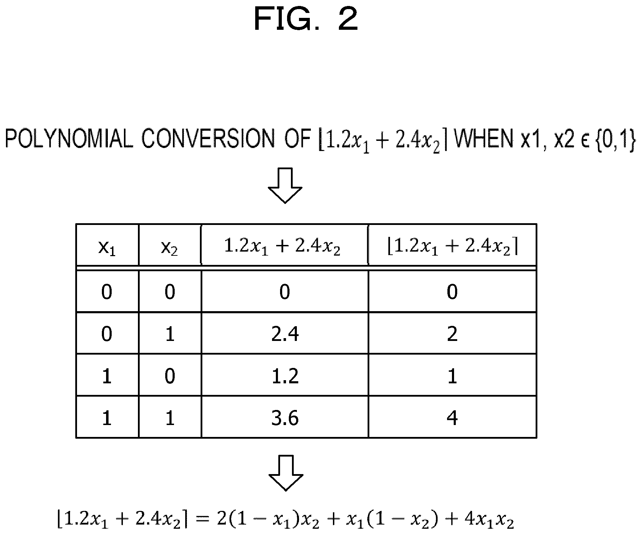

FIG. 1 is a diagram illustrating an information processing apparatus 10 according to a first embodiment. The information processing apparatus 10 illustrated in FIG. 1 is an example of a computer apparatus that converts, when an objective function to be input to an annealing calculation device 30 includes a calculation expression that "performs half adjust on a value of a polynomial" that does not satisfy restricting conditions of the annealing calculation device 30, the calculation expression into a form that satisfies the restricting conditions.
The restricting conditions of the annealing calculation device 30 described according to the present embodiment include the cases where, for example, a second or lower degree polynomial is to be processed, and the number of variables to be processed is 8192 at the maximum. Although the case where the objective function includes the calculation expression is described as the example herein, the objective function may be formed only by the calculation expression.
To satisfy the restricting conditions of the annealing calculation device 30, the information processing apparatus 10 according to the first embodiment converts the calculation expression that "performs half adjust on a value of a polynomial" into a polynomial. For example, the information processing apparatus 10 performs approximation processing on the calculation expression that "performs half adjust on a value of a polynomial" included in the objective function to perform conversion into an approximation expression. Then, the information processing apparatus 10 generates a polynomial from the converted approximation expression. At this time, when the generated polynomial is a polynomial of three or higher dimensions, the information processing apparatus 10 converts the polynomial into a two dimensional polynomial by a degree reduction method.
Then, the information processing apparatus 10 outputs to the annealing calculation device 30 the objective function that includes the calculation expression that "performs half adjust on a value of a polynomial" having been converted into a second degree polynomial (Hamiltonian). Then, the annealing calculation device 30 performs annealing calculation on the objective function to calculate a minimum value.
Here, a problem with usual polynomial conversion will be described. FIG. 2 is a diagram illustrating usual polynomial conversion. In FIG. 2, an example in which, when $x_1$ and $x_2$ takes values of 0 and 1, an "expression that calculates a half adjust value of $[1.2x_1 + 2.4x_2]$" is represented in a polynomial is discussed. In this case, as illustrated in FIG. 2, four patters which are "$x_1 = x_2 = 0$", "$x_1 = 0$ and $x_2 = 1$", "$x_1 = 1$ and $x_2 = 0$", and "$x_1 = x_2 = 1$" are calculated, and a polynomial $[2(1 - x_1)x_2 + x_1(1 - x_2) + 4x_1x_2]$ is generated in accordance with a result of the calculation.

By using this conversion technique, as represented by Expression (1), the "expression that calculates a half adjust value of $[1.2x_1 + 2.4x_2 + ... + 3.2x_n]$" having n variables may be converted into an n-th degree polynomial.

[Expression 1]

$$\lfloor 1.2x_1 + 2.4x_2 + \cdots + 3.2x_n \rfloor$$

$$= \lfloor 1.2 + 2.4 + \cdots + 3.2 \rfloor \underline{x_1 x_2 \ldots x_n} + \cdots$$

$$\text{n-th degree} \qquad \ldots (1)$$

Then, with the usual technique, the n-th degree polynomial obtained as described above is converted into a second degree polynomial by the degree reduction method. Here, the degree reduction method will be specifically described. For example, when an objective function H has a third or higher degree term as represented by Expression (2), it is known that a minimum value of Expression (3) which is a new objective function obtained by introducing a new variable $y = x_{n-1}x_n$ is coincident with a minimum value of the original objective function (Expression (2)). At this time, $g(x)x_{n-1}x_n$ is converted into $g(x)y$, and the degree is reduced by 1.

[Expression 2]

$$H(x) = f(x) + g(x)x_{n-1}x_n \qquad \ldots (2)$$

[Expression 3]

$$H(x, y) = f(x) + g(x)y$$
$$+ (\max|g(x)| + 1)(x_{n-1}x_n - 2x_{n-1}y - 2x_ny + 3y) \qquad \ldots (3)$$

When this degree reduction method is used, part of an n-th degree polynomial may be converted into an n - 1-th degree polynomial. Thus, when this technique is repeatedly used, an n-th degree polynomial may be converted into a second degree polynomial. However, a single application of the degree reduction method increases the number of useless variables by one. For example, when an n-th degree polynomial is converted down into a second degree polynomial, at least n - 2 variables are added, and accordingly, the number of variables of a Hamiltonian having undergone half adjust is at least 2n - 2. Here, when n is 4100, although the number of variables of an original n-th degree polynomial satisfies the restricting condition of the degree, the number of variables included is 2n - 2 = 8200 - 2 = 8198 after the conversion into the second degree polynomial. Thus, the restricting condition of the variables is unable to be satisfied.

As described above, when a calculation expression for half adjust is converted into an n-th degree polynomial and then converted into a second degree polynomial by the degree reduction method, an event in which the restricting condition of the variable is not satisfied may occur. This may inhibit input to the annealing calculation device 30.

Accordingly, by utilizing the fact that, instead of an accurate half adjust value, an approximate value is sufficient depending on a problem, the information processing apparatus 10 according to the first embodiment reduces the number of variables to be increased by degree reduction by lowering the dimension of the polynomial instead of performing approximation on a half adjust value.

[Functional Configuration]

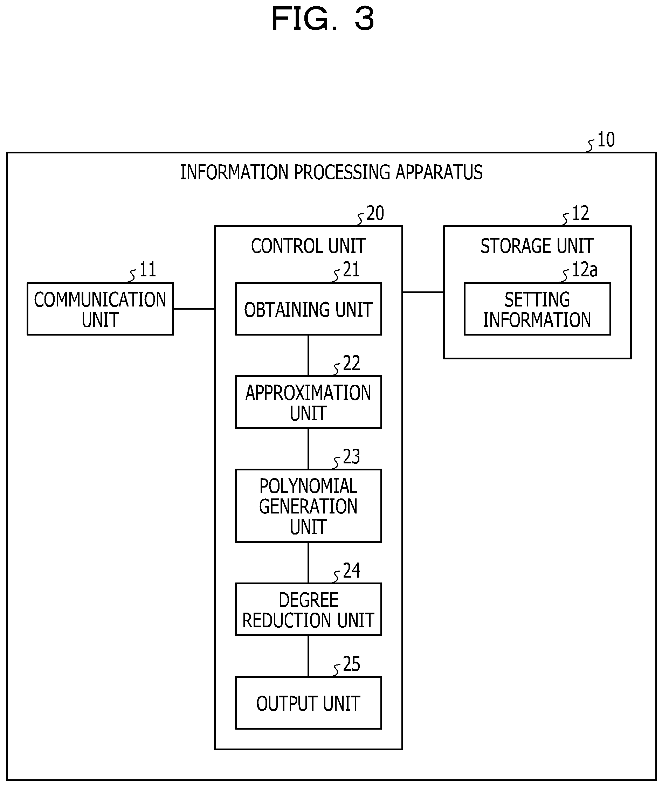

FIG. 3 is a functional block diagram illustrating a functional configuration of the information processing apparatus 10 according to the first embodiment. As the annealing calculation device 30, any of various calculation devices that perform annealing calculation on an objective function including a Hamiltonian (a second degree polynomial) may be adopted.

As illustrated in FIG. 3, the information processing apparatus 10 includes a communication unit 11, a storage unit 12, and a control unit 20. The communication unit 11 is a processing unit that controls communication with other devices and is, for example, a communication interface or the like. For example, the communication unit 11 receives an objective function including the calculation expression that "performs half adjust on a value of a polynomial" from a terminal of an administrator or the like. Also, the communication unit 11 transmits to the annealing calculation device 30 an objective function including a low degree polynomial obtained by converting the calculation expression.

The storage unit 12 stores various types of data, programs to be executed by the control unit 20, and so forth. For example, the storage unit 12 is realized by a hard disk drive, a memory, or the like. The storage unit 12 stores setting information 12a. The restricting conditions of the annealing calculation device 30 and the like are defined in the setting information 12a. The restricting conditions include, for example, a polynomial of a second or lower degree, the number of variables (for example, 8192), and so forth.

The control unit 20 is a processing unit that manages the entire information processing apparatus 10 and is realized by, for example, a processor or the like. This control unit 20 includes an obtaining unit 21, an approximation unit 22, a polynomial generation unit 23, a degree reduction unit 24, and an output unit 25. The obtaining unit 21, the approximation unit 22, the polynomial generation unit 23, the degree reduction unit 24, and the output unit 25 may also be realized by examples of electronic circuits included in the processor or a process performed by the processor.

The control unit 20 performs conversion of the objective function that is an object of the annealing calculation so as to satisfy the restricting conditions stored in the setting information 12a by using each of the processing units.

The obtaining unit 21 is a processing unit that obtains an objective function including a calculation expression that "performs half adjust on a value of a polynomial" serving as an example of a half adjust expression. Specifically, the obtaining unit 21 obtains the objective function to be subjected to the annealing calculation from the terminal of the administrator or the like and outputs the objective function to the approximation unit 22. For example, the obtaining unit 21 obtains, from the objective function H a calculation expression that "performs half adjust on the value of $[r_1x_1 + r_2x_2 + ... r_{10}x_{10}]$ that is the calculation expression that "performs half adjust on a value of a polynomial" represented by Expression (4). Here, $x_i$ is {0,1}, and i = 1 to 10.

[Expression 4]

$$H = [r_1 x_1 + r_2 x_2 + \cdots + r_{10} x_{10}], \quad x_i \in \{0, 1\} \qquad \cdots (4)$$

The approximation unit 22 is a processing unit that performs approximation in which half adjust is converted into an approximate value. When described with reference to the above-described example, the approximation unit 22 extracts the above-described calculation expression (half adjust calculation expression) from the objective function H and approximates the calculation expression. Specifically, the approximation unit 22 groups a plurality of terms included in the polynomial in the above calculation expression on a term-by-term basis and generates an approximation expression of the calculation expression that by which the values after half adjust obtained by performing the half adjust on the values of the respective grouped terms are added.

For example, the approximation unit 22 approximates $[r_1x_1 + r_2x_2 + ... + r_{10}x_{10}]$ by grouping on a term-by-term basis such as half adjust $[r_1x_1]$ and converts into an approximation expression represented by Expression (5). Then, the approximation unit 22 outputs the generated approximation expression to the polynomial generation unit 23.

[Expression 5]

$$[r_1 x_1 + r_2 x_2 + \cdots + r_{10} x_{10}] \approx [r_1 x_1] + \cdots + [r_{10} x_{10}] \qquad \cdots (5)$$

The polynomial generation unit 23 is a processing unit that converts an approximation expression into a polynomial. When described with reference to the above-described example, the polynomial generation unit 23 converts each term of the approximation expression represented by Expression (5) into an expression as represented by Expression (6). For example, the polynomial generation unit 23 converts a term that "performs half adjust on a value of $[r_1x_1]$" being a first term of Expression (5) into a term that "multiplies the result of the half adjust on $[r_1]$ by $x_1$". In this way, the polynomial generation unit 23 performs the above-described conversion on all of the 10 terms existing in Expression (5) and generates a polynomial (first degree polynomial) by which the converted terms are added.

[Expression 6]

$$[r_1 x_1] = [r_1] x_1, ..., [r_{10} x_{10}] = [r_{10}] x_{10} \qquad \cdots (6)$$

[Expression 7]

$$H \approx \lfloor r_1 \rfloor x_1 + \cdots + \lfloor r_{10} \rfloor x_{10} \qquad \ldots (7)$$

The polynomial generation unit 23 may generate a polynomial by a technique other than the above-described technique. When the generated polynomial is a polynomial of three or higher dimensions, the polynomial generation unit 23 outputs the generated polynomial to the degree reduction unit 24. In contrast, when the generated polynomial is a first degree polynomial or a second degree polynomial, the polynomial generation unit 23 outputs the polynomial to the output unit 25.

The degree reduction unit 24 is a processing unit that reduces the degree of the polynomial generated by the polynomial generation unit 23. For example, the degree reduction unit 24 repeatedly performs the degree reduction method described with Expressions (2) and (3) until the polynomial becomes a two dimensional polynomial. Then, the degree reduction unit 24 outputs the generated second degree polynomial to the output unit 25.

The output unit 25 is a processing unit that outputs to the annealing calculation device 30 the objective function including the second degree polynomial or the first degree polynomial generated by the polynomial generation unit 23 or the degree reduction unit 24. For example, the output unit 25 outputs to the annealing calculation device 30 a new objective function H including a calculation expression of Expression (7) that is converted from the calculation expression of Expression (4) and satisfies the restricting conditions of the annealing calculation device 30.

[Flow of Processing]

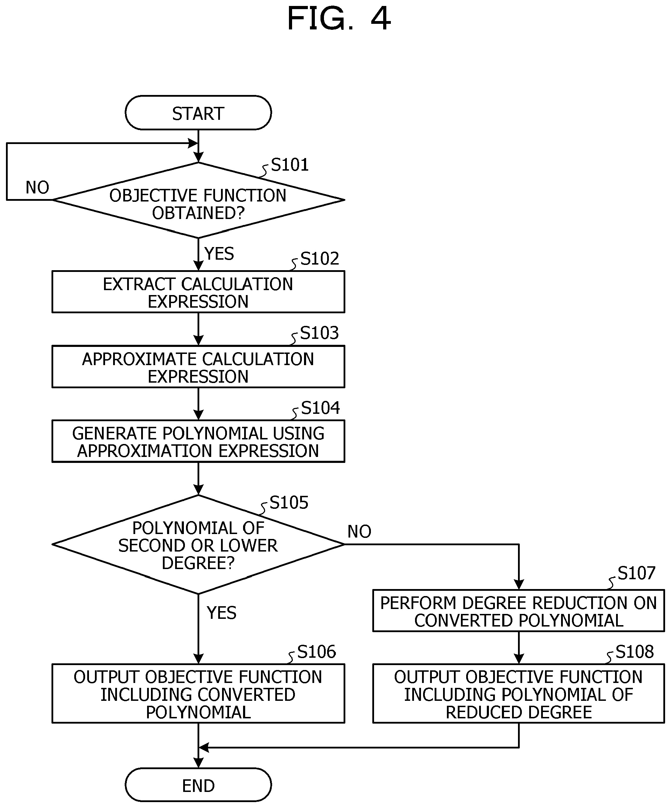

FIG. 4 is a flowchart illustrating a flow of a conversion process. As illustrated in FIG. 4, when the objective function is obtained by the obtaining unit 21 (S101: Yes), the approximation unit 22 extracts a calculation expression corresponding to a conversion target from the objective function (S102).

Next, the approximation unit 22 generates an approximation expression approximating the calculation expression (S103), and the polynomial generation unit 23 converts the approximation expression into a polynomial (S104).

When the converted polynomial is a polynomial of two or lower dimensions (S105: Yes), the output unit 25 outputs an objective function including the converted polynomial to the annealing calculation device 30 (S106).

In contrast, when the converted polynomial is a polynomial of three or higher dimensions (S105: No), the degree reduction unit 24 performs degree reduction of the polynomial (S107), and the output unit 25 outputs an objective function including a polynomial converted into a polynomial of two or lower dimensions to the annealing calculation device 30 (S108).

[Effects]

As described above, the information processing apparatus 10 may represent half adjust in a polynomial so that a calculation expression that "performs half adjust on a value of a polynomial", for example, "half adjust on a value of a polynomial" is able to be input to the annealing calculation device 30. Accordingly, the information processing apparatus 10 may reduce the degree of a polynomial by setting half adjust as an approximate value and suppress the increase in variables when the objective function is converted into the Hamiltonian.

[Second Embodiment]

Although the embodiment according to the present invention has been described above, the present invention may be implemented in various different forms other than the above-described embodiment.

[Approximation]

In the example described for the above-described embodiment, the approximation expression is generated by performing approximation on a single term basis to convert the approximation expression on a single term basis. However, this is not limiting, and conversion to the approximation expression may be performed on a two-term basis. For example, the approximation unit 22 may convert $[r_1x_1 + r_2x_2 + \ldots r_{10}x_{10}]$ into an approximation expression represented by Expression (8) by approximation on a two-term basis such as $[r_1x_1 + r_2x_2]$.

[Expression 8]

$$\lfloor r_1 x_1 + r_2 x_2 + \cdots + r_{10} x_{10} \rfloor \approx \lfloor r_1 x_1 + r_2 x_2 \rfloor + \cdots + \lfloor r_9 x_9 + r_{10} x_{10} \rfloor \qquad \ldots (8)$$

Then, the polynomial generation unit 23 converts a term that "[performs half adjust on a value of $[r_1x_1 + r_2x_2]$"

being a first term of Expression (8) into "an expression in which all of an expression that multiplies a result of half adjust on $[r_1 + r_2]$ by $[x_1x_2]$, an expression that multiplies a result of half adjust on $[r_1]$ by $[x_1(1-x_2)]$, and an expression that multiplies a result of half adjust on $[r_2]$ by $[(1-x_1)x_2]$ are added up. For example, the polynomial generation unit 23 may also convert the approximation expression generated by the technique of Expression (8) into a polynomial by the conversion expression represented by Expression (9) and generate a second degree polynomial represented by Expression (10) that adds the polynomials after the conversion.

[Expression 9]

$$H_i := \lfloor r_i x_i + r_{i+1} x_{i+1} \rceil = \lfloor r_i + r_{i+1} \rceil x_i x_{i+1} + \lfloor r_i \rceil x_i (1 - x_{i+1}) +$$

$$\lfloor r_{i+1} \rceil (1 - x_i) x_{i+1} \qquad \dots (9)$$

[Expression 10]

$$H \approx \sum_{i=1}^{5} H_i \qquad \dots (10)$$

[Round Up Function]

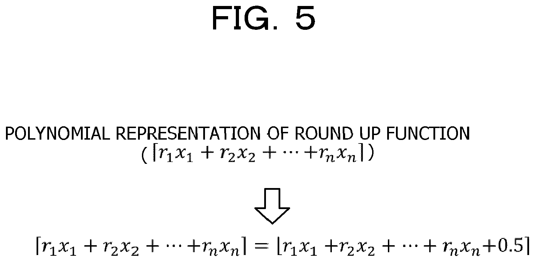

The information processing apparatus 10 may also perform the above-described processing on a round up function to generate a polynomial. FIG. 5 is a diagram illustrating a polynomial representation of a round up function. As illustrated in FIG. 5, when "a calculation expression that rounds up a value of half adjust of $[r_1x_1 + r_2x_2 + ... r_{10}x_{10}]$" is input as a round up function, the information processing apparatus 10 may perform conversion into "a calculation expression for a half adjust value of $[r_1x_1 + r_2x_2 + ... r_{10}x_{10} + 0.5]$", and then apply the same technique as that of the first embodiment, thereby to convert the round up function into a polynomial.

[Round Down Function]

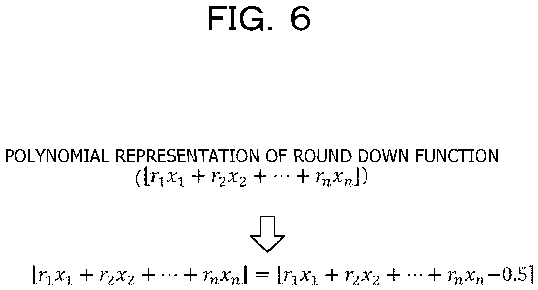

The information processing apparatus 10 may also perform the above-described processing on a round down function to generate a polynomial. FIG. 6 is a diagram illustrating a polynomial representation of a round down function. As illustrated in FIG. 6, when "a calculation expression that rounds down a value of half adjust of $[r_1x_1 + r_2x_2 + ... r_{10}x_{10}]$" is input as a round down function, the information processing apparatus 10 may perform conversion into "a calculation expression for a half adjust value of $[r_1x_1 + r_2x_2 + ... r_{10}x_{10} - 0.5]$", and then apply the same technique as that of the first embodiment, thereby to convert the round down function into a polynomial.

[Numerical Values and Others]

The value of x, the number of terms, numerical examples, calculation expressions, various forms, and the like used in the above embodiments are merely examples, and may be arbitrarily changed. The information processing apparatus 10 and the annealing calculation device 30 may be implemented in the same housing.

[System]

Unless otherwise specified, processing procedures, control procedures, specific names, and information including various types of data and parameters described in the above description or illustrated in the drawings may be arbitrarily changed.

The elements of the illustrated apparatus are of functional concepts, and the apparatus is not necessarily physically configured as illustrated in the drawings. For example, the specific form of distribution or integration of the apparatus is not limited to those illustrated in the drawings. For example, the entirety or part of the apparatus may be configured so as to be functionally or physically distributed or integrated in an arbitrary unit in accordance with various types of load, usage states, or the like. The approximation unit 22 is an example of a grouping unit and an example of a generation unit, and the polynomial generation unit 23 is an example of a conversion unit.

All or an arbitrary subset of the processing functions performed by the apparatus may be realized by a central processing unit (CPU) and programs to be analyzed and executed by the CPU or may be realized by a hardware apparatus using wired logic.

[Hardware]

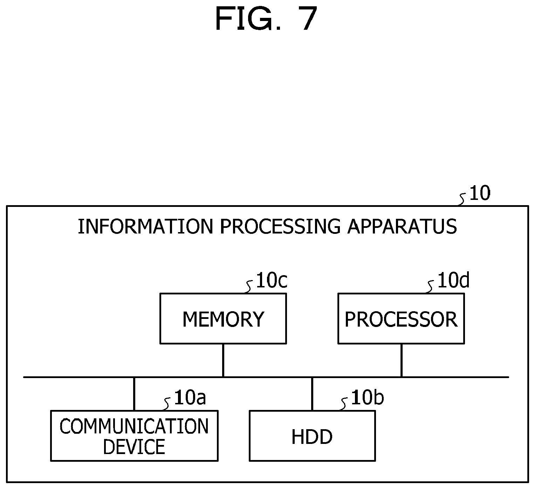

Next, an example of a hardware configuration of the information processing apparatus 10 is described. FIG. 7 is a diagram illustrating an example of a hardware configuration. As illustrated in FIG. 7, the information processing apparatus 10 includes a communication device 10a, a hard disk drive (HDD) 10b, a memory 10c, and a processor 10d. The components illustrated in FIG. 7 are coupled to each other by a bus or the like.
The communication device 10a is a network interface card or the like and communicates with another server. The HDD 10b stores programs that causes the functions illustrated in FIG. 3 to operate and a database (DB).
The processor 10d reads from the HDD 10b or the like the programs that perform processing similar to the processing performed by the processing units illustrated in FIG. 3 and loads the read programs on the memory 10c, thereby a process that performs the functions illustrated in, for example, FIG. 3 is operated. For example, this process performs the functions similar to the functions of the processing units included in the information processing apparatus 10. For example, the processor 10d reads programs having the similar functions to those of, for example, the obtaining unit 21, the approximation unit 22, the polynomial generation unit 23, the degree reduction unit 24, and the output unit 25 from the HDD 10b or the like. Then, the processor 10d performs the process of performing the same processing as the obtaining unit 21, the approximation unit 22, the polynomial generation unit 23, the degree reduction unit 24, the output unit 25, and the like.
As described above, the information processing apparatus 10 is operated as an information processing apparatus that performs the method of processing information by reading and executing the programs. The information processing apparatus 10 may also realize the similar functions to those of the above-described embodiment by reading programs from a recording medium with a medium reading device and executing the read programs. The programs described for another embodiment are not limited to the programs to be executed by the information processing apparatus 10. For example, the present invention may be similarly applied to the case where another computer or server executes the programs or the case where the other computer and server cooperate with each other to execute the programs.

**Claims**

1. An information processing program that causes a computer to execute processing of:

   grouping a plurality of terms included in a polynomial on a term-by-term basis for a calculation expression performing half adjust on a value of the polynomial;
   generating an approximation expression of the calculation expression, the approximation expression adding values of the respective grouped terms after performing half adjust on the respective grouped terms; and
   converting the calculation expression into a low degree polynomial by using each of the terms that is a unit of performing the half adjust in the approximation expression.

2. The program according to claim 1, wherein
   the information processing program causes the computer to execute processing of repeatedly performing a degree reduction method, when the low degree polynomial does not satisfy a restriction of a calculation device that is a destination of input of an objective function which includes the calculation expression and that performs annealing calculation, on the low degree polynomial a predetermined number of times and processing of converting the low degree polynomial into a low degree polynomial that satisfies the restriction.

3. The program according to claim 1, wherein
   the processing of the grouping includes grouping the terms included in the polynomial one term after another from a one of the terms at a top when values that variables of the calculation expression are able to take is 0 and 1, wherein
   the processing of the generating includes processing of generating the approximation expression by which half adjust is performed on the values of the respective grouped terms and by which the values that have undergone the half adjust are added, and wherein
   the processing of the converting includes processing of converting the terms of the approximation expression on which the half adjust is performed into respective first degree monomials and processing of generating a first degree polynomial by which the first degree monomials are added.

4. The program according to claim 1, wherein
   the processing of the grouping includes processing of grouping the terms included in the polynomial on a two-term basis from a top of the terms when the values that the variables of the calculation expression are able to take is 0 and 1, wherein

the processing of the generating includes processing of generating the approximation expression by which half adjust is performed on the values of the respective grouped terms and by which the values that have undergone the half adjust are added, and wherein

the processing of the converting includes processing of converting the terms of the approximation expression on which the half adjust is performed into respective polynomials of second degree and processing of generating a second degree polynomial by which the monomials of second degree are added.

5. An information processing method comprising:

grouping a plurality of terms included in a polynomial on a term-by-term basis for a calculation expression performing half adjust on a value of the polynomial;

generating an approximation expression of the calculation expression, the approximation expression adding values of the respective grouped terms after performing half adjust on the respective grouped terms; and

converting the calculation expression into a low degree polynomial by using each of the terms that is a unit of performing the half adjust in the approximation expression.

6. The information processing method according to claim 5, further comprising:

repeatedly performing a degree reduction method, when the low degree polynomial does not satisfy a restriction of a calculation device that is a destination of input of an objective function which includes the calculation expression and that performs annealing calculation, on the low degree polynomial a predetermined number of times; and

converting the low degree polynomial into a low degree polynomial that satisfies the restriction.

7. An information processing apparatus comprising:

a grouping unit configured to group a plurality of terms included in a polynomial on a term-by-term basis for a calculation expression by which half adjust is performed on a value of the polynomial;

a generating unit configured to generate an approximation expression, the approximation expression adding values of the respective grouped terms after performing half adjust on the respective grouped terms; and

a conversion unit configured to convert the calculation expression into a low degree polynomial by using each of the terms that is a unit of performing the half adjust in the approximation expression.

8. The information processing apparatus according to claim 7, wherein the conversion unit is further configured to:

repeatedly perform a degree reduction method, when the low degree polynomial does not satisfy a restriction of a calculation device that is a destination of input of an objective function which includes the calculation expression and that performs annealing calculation, on the low degree polynomial a predetermined number of times, and

convert the low degree polynomial into a low degree polynomial that satisfies the restriction.

# FIG. 1

INFORMATION PROCESSING APPARATUS ⌇10

HALF ADJUST CALCULATION INCLUDED IN OBJECTIVE FUNCTION →

APPROXIMATION PROCESSING

APPROXIMATION EXPRESSION

POLYNOMIAL GENERATION PROCESSING

(POLYNOMIAL OF THIRD OR HIGHER DEGREE)

DEGREE REDUCTION PROCESSING

OBJECTIVE FUNCTION INCLUDING POLYNOMIAL OF SECOND OR LOWER DEGREE

ANNEALING CALCULATION DEVICE ～30

# FIG. 2

POLYNOMIAL CONVERSION OF $\lfloor 1.2x_1 + 2.4x_2 \rfloor$ WHEN x1, x2 $\epsilon$ {0,1}

⇩

| $x_1$ | $x_2$ | $1.2x_1 + 2.4x_2$ | $\lfloor 1.2x_1 + 2.4x_2 \rfloor$ |
|---|---|---|---|
| 0 | 0 | 0 | 0 |
| 0 | 1 | 2.4 | 2 |
| 1 | 0 | 1.2 | 1 |
| 1 | 1 | 3.6 | 4 |

⇩

$$\lfloor 1.2x_1 + 2.4x_2 \rfloor = 2(1 - x_1)x_2 + x_1(1 - x_2) + 4x_1x_2$$

# FIG. 3

INFORMATION PROCESSING APPARATUS — 10

CONTROL UNIT — 20

STORAGE UNIT — 12

COMMUNICATION UNIT — 11

OBTAINING UNIT — 21

SETTING INFORMATION — 12a

APPROXIMATION UNIT — 22

POLYNOMIAL GENERATION UNIT — 23

DEGREE REDUCTION UNIT — 24

OUTPUT UNIT — 25

# FIG. 4

START

S101
OBJECTIVE FUNCTION OBTAINED? — NO

YES

S102
EXTRACT CALCULATION EXPRESSION

S103
APPROXIMATE CALCULATION EXPRESSION

S104
GENERATE POLYNOMIAL USING APPROXIMATION EXPRESSION

S105
POLYNOMIAL OF SECOND OR LOWER DEGREE? — NO

YES

S107
PERFORM DEGREE REDUCTION ON CONVERTED POLYNOMIAL

S106
OUTPUT OBJECTIVE FUNCTION INCLUDING CONVERTED POLYNOMIAL

S108
OUTPUT OBJECTIVE FUNCTION INCLUDING POLYNOMIAL OF REDUCED DEGREE

END

# FIG. 5

POLYNOMIAL REPRESENTATION OF ROUND UP FUNCTION
$$(\lceil r_1 x_1 + r_2 x_2 + \cdots + r_n x_n \rceil)$$

$$\lceil r_1 x_1 + r_2 x_2 + \cdots + r_n x_n \rceil = \lfloor r_1 x_1 + r_2 x_2 + \cdots + r_n x_n + 0.5 \rfloor$$

# FIG. 6

POLYNOMIAL REPRESENTATION OF ROUND DOWN FUNCTION
$$(\lfloor r_1 x_1 + r_2 x_2 + \cdots + r_n x_n \rfloor)$$

$$\Downarrow$$

$$\lfloor r_1 x_1 + r_2 x_2 + \cdots + r_n x_n \rfloor = \lfloor r_1 x_1 + r_2 x_2 + \cdots + r_n x_n - 0.5 \rceil$$

# FIG. 7

┌─────────────────────────────────────────────┐ ⌇10
│         INFORMATION PROCESSING APPARATUS        │
│                                                 │
│              ⌇10c              ⌇10d             │
│         ┌──────────┐      ┌──────────┐          │
│         │  MEMORY  │      │ PROCESSOR │         │
│         └──────────┘      └──────────┘          │
│                                                 │
│    ⌇10a                  ⌇10b                   │
│ ┌──────────────┐      ┌──────────┐              │
│ │COMMUNICATION │      │   HDD    │              │
│ │   DEVICE     │      │          │              │
│ └──────────────┘      └──────────┘              │
└─────────────────────────────────────────────┘

Europäisches
Patentamt

European
Patent Office

Office européen
des brevets

# EUROPEAN SEARCH REPORT

Application Number

EP 20 21 7961

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AVRADIP MANDAL ET AL: "Compressed Quadratization of Higher Order Binary Optimization Problems", ARXIV.ORG, CORNELL UNIVERSITY LIBRARY, 201 OLIN LIBRARY CORNELL UNIVERSITY ITHACA, NY 14853, 2 January 2020 (2020-01-02), XP081571151, * page 7 * | 1-8 | INV. G06F17/11 G06F17/17 G06N10/00 |
| A | WANG XINGBO: "Brief Summary of Frequently-used Properties of the Floor Function", IOSR JOURNAL OF MATHEMATICS, vol. 13, no. 5, October 2017 (2017-10), pages 46-48, XP055810300, DOI: 10.9790/5728-1305024648 Retrieved from the Internet: URL:https://www.researchgate.net/profile/Xingbo-Wang-9/publication/320009486_Brief_Summary_of_Frequently-used_Properties_of_the_Floor_Function/links/5a71c7b8a6fdcc33daab21b4/Brief-Summary-of-Frequently-used-Properties-of-the-Floor-Function.pdf> * the whole document * | 1-8 | |

-----

-----

-/--

TECHNICAL FIELDS SEARCHED (IPC)

G06F
G06N

The present search report has been drawn up for all claims

| Place of search | Date of completion of the search | Examiner |
|---|---|---|
| Berlin | 3 June 2021 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

## EUROPEAN SEARCH REPORT

Application Number

EP 20 21 7961

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MERCA MIRCEA: "Inequalities and Identities Involving Sums of Integer Functions", JOURNAL OF INTEGER SEQUENCES, vol. 14, no. 9, October 2011 (2011-10), pages 1-26, XP055810296, Retrieved from the Internet: URL:https://www.researchgate.net/profile/Mircea-Merca/publication/228522941_Inequalities_and_Identities_Involving_Sums_of_Integer_Functions/links/0fcfd4ffbf1cee663d000000/Inequalities-and-Identities-Involving-Sums-of-Integer-Functions.pdf> * the whole document * ----- | 1-8 | |
| A,D | JP 2000 183753 A (SONY CORP) 30 June 2000 (2000-06-30) * the whole document * ----- | 1-8 | |
| | | | TECHNICAL FIELDS SEARCHED (IPC) |

The present search report has been drawn up for all claims

| Place of search | Date of completion of the search | Examiner |
|---|---|---|
| Berlin | 3 June 2021 | Huguet Serra, G |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 21 7961

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2021

| Patent document cited in search report | Publication date | Patent family member(s) | Publication date |
|---|---|---|---|
| JP 2000183753 A | 30-06-2000 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000183753 A